(19) **Europäisches Patentamt European Patent Office Office européen des brevets**

(11) **EP 3 988 896 B1**

(12) **EUROPEAN PATENT SPECIFICATION**

(45) Date of publication and mention of the grant of the patent:
**05.04.2023 Bulletin 2023/14**

(21) Application number: **20203550.7**

(22) Date of filing: **23.10.2020**

(51) International Patent Classification (IPC):
**G01B 17/06** *(2006.01)*    **G01M 17/10** *(2006.01)*

(52) Cooperative Patent Classification (CPC):
**G01M 17/10**

(54) **METHOD AND SYSTEM FOR DIAGNOSING A ROTATION MACHINE**

VERFAHREN UND SYSTEM ZUR DIAGNOSE EINER DREHMASCHINE

PROCÉDÉ ET SYSTÈME POUR LE DIAGNOSTIC D'UNE MACHINE TOURNANTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.04.2022 Bulletin 2022/17**

(73) Proprietor: **Hitachi, Ltd.**
**Tokyo 100-8280 (JP)**

(72) Inventors:
• **YAMASHITA, Tomoaki**
**London, EC2Y 5AJ (GB)**
• **KATO, Tetsuji**
**London, EC2Y 5AJ (GB)**
• **ELLIS, Robert**
**London, EC2Y 5AJ (GB)**

(74) Representative: **MERH-IP Matias Erny Reichl Hoffmann**
**Patentanwälte PartG mbB**
**Paul-Heyse-Strasse 29**
**80336 München (DE)**

(56) References cited:
**WO-A1-2019/155627     US-A1- 2007 118 333**
**US-B1- 10 151 582      US-B2- 8 577 546**

## Description

The herein described subject matter relates to a method and a diagnostic system for diagnosing failures of rotating components of a railway vehicle.

Background

Mechanical failures of rotating components in drive trains of railway vehicles can cause serious damage. Unexpected failures lead to operational disruption, increased costs, and safety concerns. To solve this issue, a diagnostic device is needed that monitors the rotating components in a railway. vehicle and diagnosis occurring failures with high accuracy.

> Patent Literature 1: US 8 577 546 B2
> Patent Literature 2: US 2007/118333 A1
> Patent Literature 3: WO 2019/155627 A1
> Patent Literature 4: US 10 151 582 B1
> Patent Literature 5: US 8 577 546 B2

Patent Literature 1 describes a method for monitoring the driving behaviour of a railway vehicle by analysing accelerations of a wheel set measured by a vibration sensor mounted thereon. The captured time-based signal is transformed into a frequency response and subsequently compared with a reference frequency response. The comparison is carried out based on modal parameters such as the dynamic resilience, which is inter alia dependent on the rotation frequency of the wheel set. Patent Literature 2 discloses an abnormality diagnosis system for diagnosing a presence or absence of an abnormality of a bearing unit for a railway vehicle axle, comprises a sensing/processing portion for outputting a signal generated from the bearing unit as an electric signal, a calculating/processing portion for making an abnormality diagnosis of the bearing unit based on an output of the sensing/processing portion, a result outputting portion for outputting a decision result of the calculating/processing portion, and a controlling/processing portion for feeding back a control signal to a control system of the railway vehicle based on the decision result. None of these documents in particular discloses the inventive concept of monitoring the frequency shift of an externally measured value of the speed of a railway vehicle and correlating it to a wheel diameter change for a more precise assessment of the wear status of the wheel.

The rotation frequency $\omega_w$ of a wheel set is usually determined from the vehicle speed of the railway vehicle using the following formula:

$$\omega_w = \frac{v}{D_w * \pi} \qquad (1)$$

wherein v is the vehicle speed of the railway vehicle and $D_w$ is the wheel diameter.

However, during the lifetime of a wheel set, the wheel diameter changes due to wear. It may also possible, that the wheel diameter is reduced as a result of a repair measure, which may be necessary to ensure the concentricity of the wheels. Thus, if the wheel diameter $D_w$ used in formula (1) is not adapted to wheel wear or repairing measures, a deviation in the calculated rotation frequency occurs. This deviation also affects the characteristic frequencies at which a failure of a rotating component can be detected. As a result, an increasing signal amplitude of a vibration sensor at a characteristic frequency may not be recognized.

Summary

An object of the herein described subject matter is to realise a method and a diagnostic device for precisely and reliably diagnosing mechanical failures of rotating components in a railway vehicle by determining the characteristic frequencies of the rotating components with high accuracy. This problem is solved by the subject matter according to the independent claims. Further preferred developments are described by the dependent claims.

The herein described subject matter comprises a method for diagnosing rotating components of a railway vehicle. The railway vehicle may include a plurality of wheels, a plurality of rotating components, at least one sensor mounted on at least one of the plurality of rotating components, and at least one diagnostic device.

The at least one diagnostic device receives a measuring signal from a sensor mounted on a rotating component of the railway vehicle and determines a frequency spectrum of the measuring signal. The measuring signal may be a vibration signal such as an acceleration signal or a displacement signal from an acceleration or displacement sensor.

Alternatively or additionally, an acoustic sensor, a vibration speed sensor, a strain gauge, or any kind of sensor suitable for monitoring vibrations of rotating components may be used.

The frequency spectrum may be generated from the time-based measuring signal by a Discrete Fourier Transformation (DFT) or a Fast Fourier Transformation (FFT) or any kind of frequency transformation suitable for analyzing acceleration or displacement signals of a rotating component.

Furthermore, the diagnostic device receives a velocity of the railway vehicle and determines a rotation frequency of the rotating component based on the railway vehicle velocity and a diameter of a wheel of the railway vehicle. The diagnostic device may determine the wheel rotation frequency according to formula (1) above. To determine the rotation frequency of further rotating components of the drive train, one or more gear ratios may have to be considered depending on the position of the respective component.

Further, the diagnostic device determines a characteristic frequency of the rotating component based on component parameters and the determined rotation frequency. The "characteristic frequency" of a rotating component shall be understood, preferably, as the frequency at which a failure of the component or a part of the component can be detected.

In terms of a gear assembly, as an example for a rotating component, the gear mesh frequency (GMF) is a characteristic frequency that appears in the frequency spectrum regardless of the condition of the gears. However, its amplitude increases with increasing wear of the gears. The gear mesh frequency is calculated according to the following formula (2) where, Z is the number of teeth (component parameter) and $\omega_G$ is the rotation frequency of the gear:

$$GMF = Z * \omega_G \qquad (2)$$

With respect to a bearing as another example of a rotating component, more than one characteristic frequency occurs, each frequency being assignable to a part of the bearing. The frequencies that rolling bearings generate when rollers pass over a surface anomaly on either the roller or the ringway are a function of the bearing geometry (pitch diameter, roller (ball) diameter, number of rollers (balls) $\triangleq$ component parameters) and the relative speed between the two ringways. These characteristic frequencies are also known as fundamental fault frequencies and can be calculated according to the following formulas (3) to (6):

$$BPFI = \frac{N}{2} * (1 + \frac{B}{P} \cos \alpha) * \omega_S \qquad (3)$$

$$BPFO = \frac{N}{2} * (1 - \frac{B}{P} \cos \alpha) * \omega_S \qquad (4)$$

$$BSF = \frac{P}{2B} * (1 - \left(\frac{B}{P}\right)^2 \cos \alpha^2) * \omega_S \qquad (5)$$

$$FTF = \frac{1}{2} * (1 - \frac{B}{P} \cos \alpha) * \omega_S \qquad (6)$$

where

BPFI = ball pass frequency inner ring,
BPFO = ball pass frequency outer ring,
BSF = ball spin frequency.
FTF = fundamental train frequency,
N = number of balls,
B = ball diameter
P = pitch diameter
$\alpha$ = contact angle
$\omega_S$ = shaft frequency.

For failure detection, the diagnostic device determines a signal amplitude of the frequency spectrum of the measuring signal at the characteristic frequency, compare the determined signal amplitude with a reference value and detect a failure if the signal amplitude exceeds the reference value. It is clear to the person skilled in the art that in terms of a rotating component with several characteristic frequencies, such as a rolling bearing, the signal amplitudes at each of the characteristic frequencies are determined and compared with the respective reference value.

In order to improve the accuracy of the calculated wheel rotation frequency during lifetime of a wheel set, the wheel diameter is updated regularly at predetermined time intervals. Since the wheel rotation frequency is basis for each rotation frequency of the drive train, the above described method ensures that the characteristic frequencies of each rotating component are correctly calculated and that increasing amplitudes at the characteristic frequencies are reliably recognized.

The wheel diameter is measured in a first predetermined time interval when a regular inspection of the railway vehicle is carried out and inputted into the diagnostic device after the measurement. Preferably, the first predetermined time interval may be in a range of 6 to 12 month. It may also be possible to have the regular inspection at which the wheel diameter is updated after a predetermined number of driven kilometers, for example every 100.000 kilometers.

Alternatively or in addition, the wheel diameter is measured automatically in a second predetermined time interval and inputted into the diagnostic device after the measurement. The second predetermined time interval may be shorter than the first time interval. Preferably, the second predetermined time interval may be in a range of 1 to 3 month. Automatic measurement shall be understood as a measurement that is triggered without human interaction, for example by a vehicle control unit of the railway vehicle or the diagnosis device itself, depending on a predetermined parameter, namely after the second predetermined time interval has elapsed. This allows for regularly updating the wheel diameter and ensures a correct determination of the characteristic frequencies of the rotating components of the drive train.

According to an aspect, the automatic measurement of the wheel diameter may be carried out by at least one measuring device attached to the rail vehicle. This enables an independent determination of the wheel diameter outside of the regular inspection times of the rail vehicle.

According to a further aspect, the automatic measurement of the wheel diameter may be carried out by at least one measuring device attached to the railway line. In this case, it may be possible that the automatic measurement is carried out when the railway vehicle passes the measuring device in the frame of its usual schedule.

In both positions of the measuring device described above, the determined wheel diameter may be transmitted to the diagnostic device via a network, for example, via a wireless local area network (WLAN) or any other network suitable to transmit signals captured by a measuring device.

According to an aspect, the at least one measuring device may be a camera system. There are several camera systems installed at a railway vehicle or along the railway line that are used for inspection tasks. Using such a camera system for determining the wheel diameter, the correct rotation frequency of the wheel shaft can be calculated without the need for an additional measuring device.

According to a further aspect of the method, the measured wheel diameter may be inputted into the diagnostic device manually or automatically. In case the wheel diameter is measured during an inspection, the wheel diameter may be inputted manually into the diagnosis device by an inspecting person. It may also be possible to transmit the measured wheel diameter from a workshop server to the diagnostic device via a network, preferably in a wireless manner. The network may be any network suitable to transmit the measured value.

Alternatively or additionally, the measured wheel diameter may be inputted into the vehicle control unit, which then transmits the value to the diagnostic device. In case the wheel diameter is measured automatically, for example, by a camera system attached to the railway line, the measured value may be transmitted automatically to the diagnostic device when the camera system has finished the measurement.

The velocity of the railway vehicle is determined from position data from a global navigation satellite system (GNSS), such as the global positioning system (GPS) or Galileo. Since position data are already used in rail systems to track the movement of railway vehicles, no additional effort is needed to achieve the data for determining the vehicle velocity. Alternatively or additionally, the diagnostic device receives the velocity of the railway vehicle from the vehicle control unit.

The herein described subject matter further comprises a diagnostic device including an input unit configured to receive a wheel diameter of a railway vehicle and component parameters of a rotating component, a data storage configured to store the wheel diameter and the component parameters received by the input unit, a signal capturing unit configured to receive a measuring signal from a sensor mounted on the rotating component, a frequency analysis unit configured to determine a frequency spectrum of the received measuring signal, a characteristic frequency determination unit configured to determine a characteristic frequency of the rotating component based on a velocity of the railway vehicle, the wheel diameter and the component parameters, wherein the velocity of the railway vehicle is determined from global navigation satellite system data or received from at least one vehicle control unit of the railway vehicle, a comparison unit configured to compare a signal amplitude of the frequency spectrum of the received measuring signal at the characteristic frequency with a reference value stored in the data storage, and an evaluation unit configured to detect a failure if the signal amplitude exceeds the reference value, wherein the diagnostic device performs the above described method.

The herein described subject matter further comprises a railway vehicle including a plurality of wheels, a plurality of rotating components, at least one sensor mounted on at least one of the plurality of rotating components, at least one vehicle control unit and the above described diagnostic device. The plurality of rotating components may comprise at least one gear and at least one bearing.

The herein described subject matter further comprises a computer program product storable in a memory comprising instructions which, when carried out by a computer, may cause the computer to perform the above described method.

Summarizing, the herein described subject matter ensures that the characteristic frequencies of each rotating component, which are necessary for detecting component failures, are correctly calculated and that increasing amplitudes at the characteristic frequencies are reliably recognized. For this purpose, the calculation of the wheel rotation frequency is regularly adjusted by updating the wheel diameter.

Brief Description of Drawings

In the following, the invention will be further explained based on at least one preferential example of the invention with reference to the attached exemplary drawings, wherein:

Fig. 1             schematically depicts an example of a drive train of a railway vehicle;

Figs. 2a and 2b    schematically depict a shift in the frequency signal and the determined maximum amplitudes with and without wheel diameter update;

Fig. 3             schematically depicts a first example for updating the wheel diameter;

Figs. 4a and 4b    schematically depict a second and a third example for updating the wheel diameter;

Fig. 5             schematically depicts an example of a diagnostic device for detecting a failure of a rotating component;

Fig.6              depicts a flowchart that describes an exemplary method for detecting a failure of a rotating component.

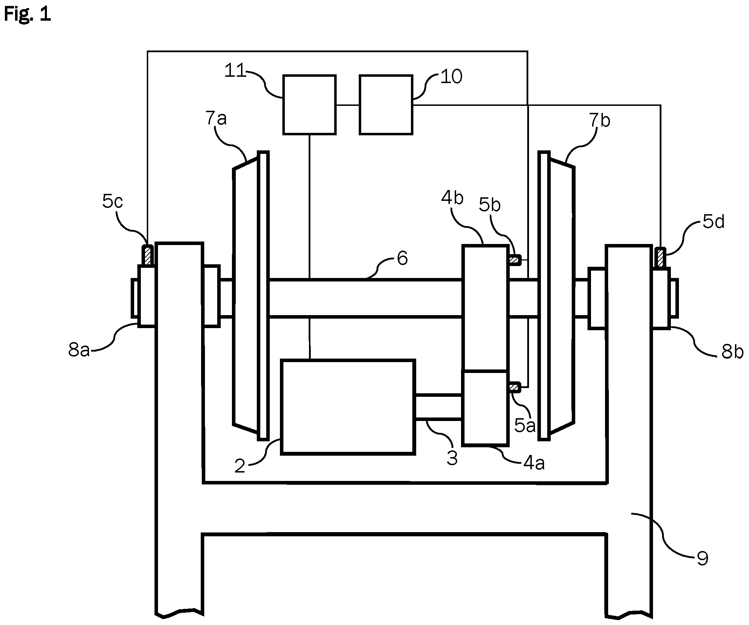

Fig. 1 schematically depicts an example of a drive train of a railway vehicle. The depicted drive train comprises a bogie frame 9 hosting a motor 2, which is electrically connected to a vehicle control unit 11, a motor shaft 3, a first gear 4a, a second gear 4b, a wheel shaft 6, a wheel set 7a, 7b and two rolling bearings 8a, 8b. In the depicted example, the first and second gear 4a, 4b and the rolling bearings 8a, 8b of the drive train are equipped with sensors 5a to 5d for measuring the vibrations of the different rotating components. The sensors 5a to 5d are electrically connected to a diagnostic device 10 which receives the sensor signals to perform failure analysis. The diagnostic device 10 is connected to the vehicle control unit 11 in order to exchange the required information between the two units. If, for example, the diagnostic device 10 detects a component failure and outputs an alarm, this alarm signal may be sent to the vehicle control unit 11, which may then initiate the respective control measures. The diagnostic device 10 may, for example, receive the vehicle speed for calculating the rotation frequency of the wheel shaft 6 from the vehicle control unit 11. It may also be possible that the diagnostic device 10 determines the vehicle speed using GNSS based position data, such Galileo or GPS data.

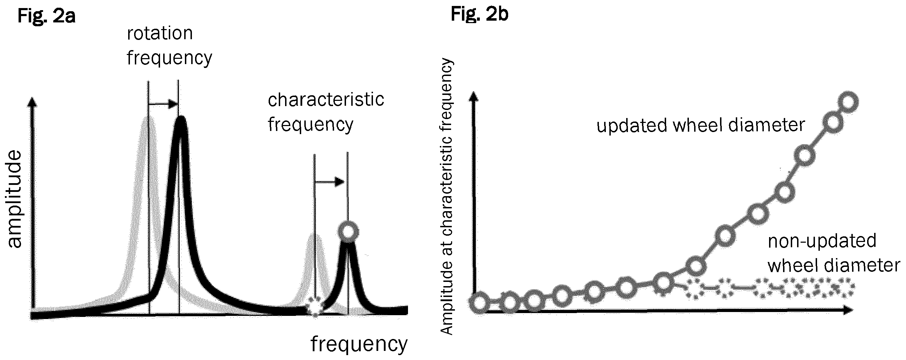

Figs. 2a and 2b schematically depict a shift in the frequency signal and the determined maximum amplitudes with and without a wheel diameter update.

The light gray curve depicted in Fig. 2a represents a frequency signal of a rotating component when the wheels are in a new/not worn condition having the original wheel diameter. Due to wear and repairing measures, the wheel diameter is reduced (black curve), so that the rotation frequency at the same vehicle speed is shifted to a higher value. As a result, the characteristic frequency of the rotating component is also shifted to a higher value.

Fig. 2b illustrates the consequences if the wheel diameter for calculating the rotation frequency is not adapted and thus, the frequency shift is not considered. In this case, the signal amplitude is still regarded at the characteristic frequency determined for the original wheel diameter (dotted circles), and the detection device fails to recognize an increasing signal amplitude at the actual characteristic frequency (solid circles).

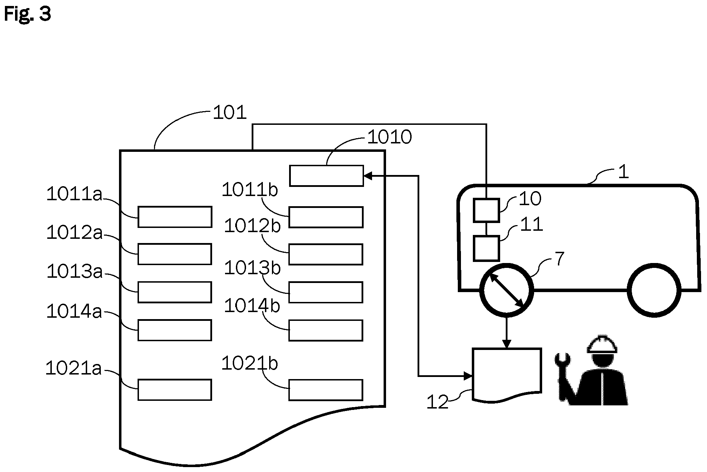

in Fig. 3 a first example for updating the wheel diameter is shown. In this context, Fig. 3 shows schematically an example of an interface for the input unit 101 of the diagnostic device 10. The depicted interface of the input unit 101 includes a plurality of input fields such as a field for entering the wheel diameter 1010 as well as the fields 1011a to 1021b for entering the component parameters of the rolling bearings 8a, 8b and the first and second gear 4a, 4b.

In the following the fields for inputting the component parameters are explained in more detail: the specific ball pass frequency of the inner ring $BPFI/\omega_S$ of the rolling bearings 8a, 8b is entered into the fields 1011a, 1011b, the specific ball pass frequency of the outer ring BPFO/$\omega_S$ is entered into the fields 1012a, 1012b, the specific fundamental train frequency FTF/$\omega_S$ is entered into the fields 1013a, 1013b and the specific ball spin frequency BSF/$\omega_S$ is entered into the fields 1014a, 1014b. The additional fields 1021a, 1021b represent the input fields for the specific gear mesh frequencies GMF/$\omega_G$ of the first and second gear. The aforementioned "specific" frequencies include the relevant geometrical parameters of the respective components according to the formulas (2) to (6). In this context, the term "specific" shall be understood as "with respect to the frequency of the component".

The described input fields for the component parameters may be filled manually, e.g., by an operator or automatically, e.g., from a rail system server via a network, e.g. via a wireless local area network (WLAN). Alternatively, the respective component parameters may be stored in the vehicle control unit 11 and may be transmitted to the diagnostic unit 10 when the characteristic frequencies are recalculated due to an update of the wheel diameter.

When a diameter of a wheel 7 is measured during an inspection of the railway vehicle 1, the inspection result 12 is entered into the input field 1010 of the input unit 10 of the diagnostic device 10. According to the input of the component parameters, the updated wheel diameter may be entered manually, e.g., by an inspecting person or may be entered automatically, e.g., from a workshop server via a network.

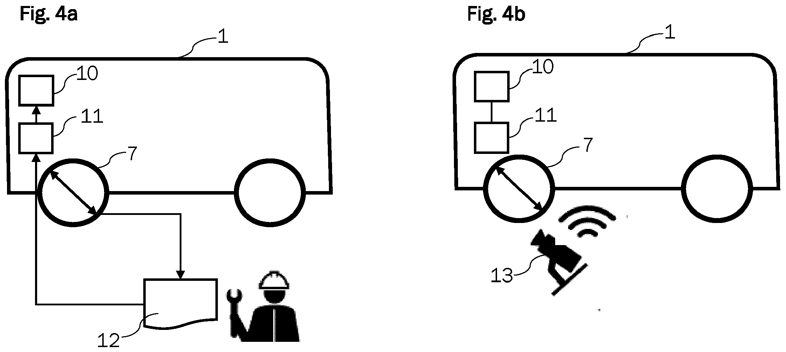

In Figs. 4a and 4b a second and a third example for updating the wheel diameter is shown. In the second example illustrated in Fig. 4a, the wheel diameter is also measured during an inspection of the railway vehicle 1. In contrast to the first example, the inspection result 12 is inputted into the vehicle control unit 11 from which it is transmitted to the diagnostic device 10. Providing the updated wheel diameter also in the vehicle control unit 11 enables the latter to use the value in various other control functions to improve its control accuracy.

In the third example shown in Fig. 4b, the diameter of a respective wheel 7 is determined by capturing a picture of the wheel 7 using a camera system 13 attached to the railway vehicle 1 or the railway line (not depicted). The wheel diameter is measured from the captured picture by the camera system 13 using optical methods and transmitted to the vehicle control unit 11 and/or to the diagnostic device 10 via a network, e.g., via a wireless local area network (WLAN). This allows for updating the wheel diameter in a shorter interval independent from an inspection of the railway vehicle 1.

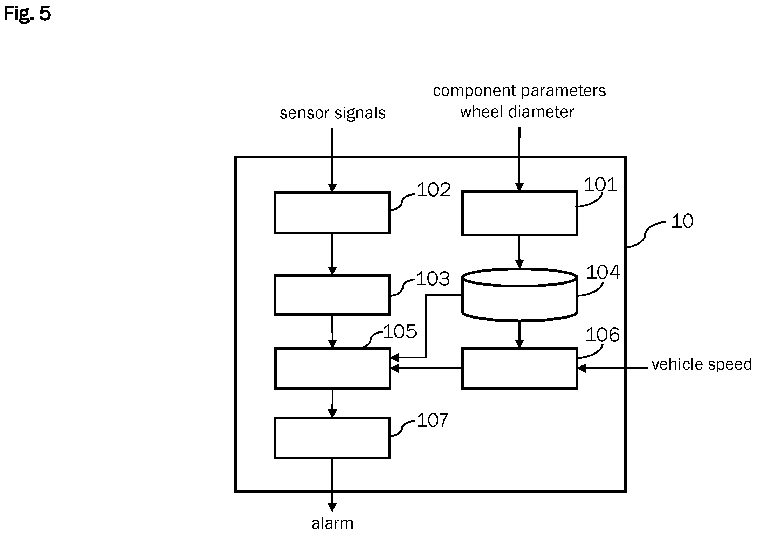

Fig.5 depicts an example of a diagnostic device 10 for detecting a failure of a rotating component. The diagnostic device 10 comprises inter alia a signal capturing unit 102 and a frequency analysis unit 103. The signal capturing unit 102 captures the sensor signals from the sensors 5a to 5d mounted on the first and second gear 4a, 4b and on the rolling bearings 8a, 8b. The signals may be acquired at a predetermined operation condition of the railway vehicle 1 for a predetermined time. The frequency analysis unit 103 performs a frequency analysis, e.g. a FFT analysis, to transform the time-based captured signals into a frequency spectrum.

Furthermore, the diagnostic device 10 comprises an input unit into which the current wheel diameter and the component parameters of the rolling bearings 8a, 8b and the gears 4a, 4b are entered. The inputted values are then stored in a data storage 104, from which the characteristic frequency determination unit 106 can retrieve these values to determine the characteristic frequencies of the respective components.

For determining/estimating and/or calculating said characteristic frequencies, the characteristic frequency determination unit 106 additionally receives the vehicle speed of the railway vehicle 1, e.g., from the vehicle control unit 11 or based on data of a GNSS. The comparison unit 105 of the diagnostic device 10 subsequently compares the amplitudes of each acquired measurement signal at the characteristic frequencies of the respective rotating component with a corresponding reference value, which is stored in the data storage 104. In case a signal amplitude at a characteristic frequency exceeds the reference value, the evaluation unit 107 detects a component failure.

If, for example, the signal amplitude of the bearing sensor signal exceeds its reference value at the ball pass frequency of the inner ring, the data evaluation unit 107 diagnoses damage to the inner ring of the respective bearing 8a, 8b. The diagnosis result may be transmitted, e.g., to the vehicle control unit 11 or directly to a display of the railway vehicle 1, in order to initiate a repair of the damaged component.

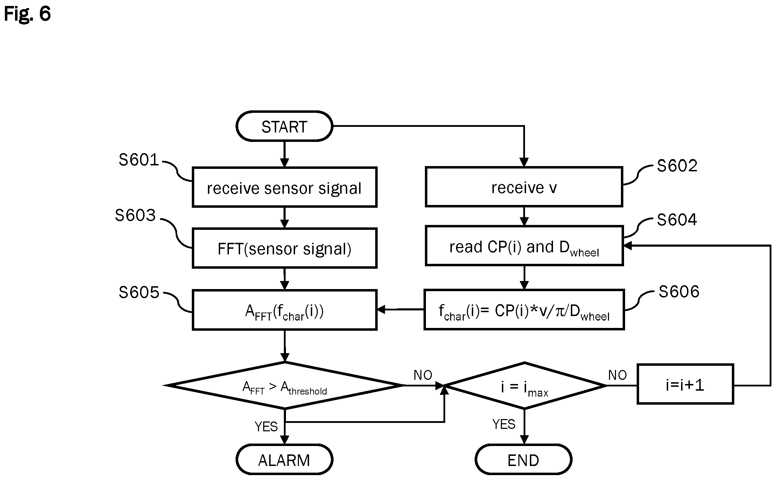

Fig. 6 depicts a flowchart that describes exemplarily how a failure of a rotating component can be detected by the claimed method. In step S601 the diagnostic device 10 receives a sensor signal, e.g., a measuring signal from one of the acceleration sensors 5c, 5d mounted on the rolling bearings 8a, 8b. The received signal is then transformed into a frequency spectrum by performing an FFT analysis in step S603. On a parallel path the diagnostic device 10 receives the vehicle velocity v in step S602 from the vehicle control unit 11 or a GNSS and retrieves the component parameters CP(i) of the respective rolling bearing 8a, 8b as well as the current wheel diameter $D_{wheel}$ from the data storage 104 of the diagnostic device 10.

In step S606 the four relevant characteristic frequencies (BPFI, BPFO, FTF and BSF) of the respective rolling bearing 8a, 8b are calculated based in the component parameters CP(1) to CP(4), the vehicle velocity v and the wheel diameter $D_{wheel}$. The component parameters CP(1) to CP(4) correspond to the specific frequencies BPFI/$\omega_S$, BPFO/$\omega_S$, FTF/$\omega_S$ and BSF/$\omega_S$ described in connection with Fig. 3 above. When a characteristic frequency CP(i) is calculated, an amplitude $A_{FFT}$ of the transformed measuring signal is determined at said characteristic frequency (S605) and compared to a reference amplitude Athreshold. In case the determined amplitude $A_{FFT}$ exceeds the threshold value of the reference amplitude $A_{threshold}$, an alarm is outputted by the diagnostic device 10, which causes an inspection and/or a replacement of the rolling bearing 8a, 8b.

The comparison of the signal amplitude $A_{FFT}$ with a reference amplitude $A_{threshold}$ is carried out in succession at each characteristic frequency of the rolling bearing 8a, 8b, to exactly detect the part of the bearing 8a, 8b which is affected by a possible damage. Since the calculation of the characteristic frequencies (S606) considers the current wheel diameter $D_{wheel}$ of the vehicle wheels 7, the accuracy of the diagnosis is improved, and a possible damage of a bearing part can be detected with high accuracy.

Summarizing, the herein described subject matter ensures that the characteristic frequencies of each rotating component, which are necessary for detecting component failures, are correctly calculated and that increasing amplitudes at the characteristic frequencies are reliably recognized. For this purpose, the calculation of the wheel rotation frequency is regularly adjusted by updating the wheel diameter.

As will be appreciated by one of skill in the art, the present disclosure, as described hereinabove and the accompanying figures, may be embodied as a method, an apparatus (including a device, machine, system, computer program product, and/or any other apparatus), or a combination of the foregoing.

Accordingly, embodiments of the present disclosure may take the form of an entirely hardware embodiment, an entirely software embodiment (including firmware, resident software, micro-code, etc.), or an embodiment combining software and hardware aspects that may generally be referred to herein as a "system". Furthermore, embodiments of the present disclosure may take the form of a computer program product on a computer-readable medium having computer-executable program code embodied in the medium.

It should be noted that arrows may be used in drawings to represent communication, transfer, or other activity involving two or more entities. Double-ended arrows generally indicate that activity may occur in both directions (e.g., a command/request in one direction with a corresponding reply back in the other direction, or peer-to-peer communications initiated by either entity), although in some situations, activity may not necessarily occur in both directions.

Single-ended arrows generally may indicate activity exclusively or predominantly in one direction, although it should be noted that, in certain situations, such directional activity actually may involve activities in both directions (e.g., a message from a sender to a receiver and an acknowledgement back from the receiver to the sender, or establishment of a connection prior to a transfer and termination of the connection following the transfer). Thus, the type of arrow used in a particular drawing to represent a particular activity is exemplary and should not be seen as limiting.

Aspects are described hereinabove with reference to flowchart illustrations and/or block diagrams of methods and apparatuses, and with reference to a number of sample views of a graphical user interface generated by the methods and/or apparatuses. It will be understood that each block of the flowchart illustrations and/or block diagrams, and/or combinations of blocks in the flowchart illustrations and/or block diagrams, as well as the graphical user interface, can be implemented by computer-executable program code.

The computer-executable program code may be provided to a processor of a general purpose computer, special purpose computer, or other programmable data processing apparatus to produce a particular machine, such that the program code, which executes via the processor of the computer or other programmable data processing apparatus, create means for implementing the functions/acts/outputs specified in the flowchart, block diagram block or blocks, figures, and/or written description.

These computer-executable program code may also be stored in a computer-readable memory that can direct a computer or other programmable data processing apparatus to function in a particular manner, such that the program code stored in the computer readable memory produce an article of manufacture including instruction means which implement the function/act/output specified in the flowchart, block diagram block(s), figures, and/or written description.

The computer-executable program code may also be loaded onto a computer or other programmable data processing apparatus to cause a series of operational steps to be performed on the computer or other programmable apparatus to produce a computer-implemented process such that the program code which executes on the computer or other programmable apparatus provides steps for implementing the functions/acts/outputs specified in the flowchart, block diagram block(s), figures, and/or written description. Alternatively, computer program implemented steps or acts may be combined with operator or human implemented steps or acts in order to carry out an embodiment.

It should be noted that terms such as "server" and "processor" may be used herein to describe devices that may be used in certain embodiments and should not be construed to limit to any particular device type unless the context otherwise requires. Thus, a device may include, without limitation, a bridge, router, bridge-router (brouter), switch, node, server, computer, appliance, or other type of device. Such devices typically include one or more network interfaces for communicating over a communication network and a processor (e.g., a microprocessor with memory and other peripherals and/or application-specific hardware) configured accordingly to perform device functions.

Communication networks generally may include public and/or private networks; may include local-area, wide-area, metropolitan-area, storage, and/or other types of networks; and may employ communication technologies including, but in no way limited to, analog technologies, digital technologies, optical technologies, wireless technologies (e.g., Bluetooth), networking technologies, and internetworking technologies.

It should also be noted that devices may use communication protocols and messages (e.g., messages created, transmitted, received, stored, and/or processed by the device), and such messages may be conveyed by a communication network or medium.

Unless the context otherwise requires, the present disclosure should not be construed as being limited to any particular communication message type, communication message format, or communication protocol. Thus, a communication message generally may include, without limitation, a frame, packet, datagram, user datagram, cell, or other type of communication message.

Unless the context requires otherwise, references to specific communication protocols are exemplary, and it should be understood that alternative embodiments may, as appropriate, employ variations of such communication protocols (e.g., modifications or extensions of the protocol that may be made from time-to-time) or other protocols either known or developed in the future.

It should also be noted that logic flows may be described herein to demonstrate various aspects and should not be construed to limit the disclosure to any particular logic flow or logic implementation. The described logic may be partitioned into different logic blocks (e.g., programs, modules, functions, or subroutines) without changing the overall results.

Often times, logic elements may be added, modified, omitted, performed in a different order, or implemented using different logic constructs (e.g., logic gates, looping primitives, conditional logic, and other logic constructs) without changing the overall results.

The present disclosure may be embodied in many different forms, including, but in no way limited to, computer program logic for use with a processor (e.g., a microprocessor, microcontroller, digital signal processor, or general purpose computer), programmable logic for use with a programmable logic device (e.g., a Field Programmable Gate Array (FPGA) or other PLD), discrete components, integrated circuitry (e.g., an Application Specific Integrated Circuit (ASIC)), or any other means including any combination thereof Computer program logic implementing some or all of the described functionality is typically implemented as a set of computer program instructions that is converted into a computer executable form, stored as such in a computer readable medium, and executed by a microprocessor under the control of an operating system. Hardware-based logic implementing some or all of the described functionality may be implemented using one or more appropriately configured FPGAs.

Computer program logic implementing all or part of the functionality previously described herein may be embodied in various forms, including, but in no way limited to, a source code form, a computer executable form, and various intermediate forms (e.g., forms generated by an assembler, compiler, linker, or locator).

Source code may include a series of computer program instructions implemented in any of various programming languages (e.g., an object code, an assembly language, or a high-level language such as Fortran, C, C++, JAVA, or HTML) for use with various operating systems or operating environments. The source code may define and use various data structures and communication messages. The source code may be in a computer executable form (e.g., via an interpreter), or the source code maybe converted (e.g., via a translator, assembler, or compiler) into a computer executable form.

Computer-executable program code for carrying out operations of embodiments of the present disclosure may be written in an object oriented, scripted or unscripted programming language such as Java, Perl, Smalltalk, C++, or the like. However, the computer program code for carrying out operations of embodiments may also be written in conventional procedural programming languages, such as the "C" programming language or similar programming languages.

Computer program logic implementing all or part of the functionality previously described herein may be executed at different times on a single processor (e.g., concurrently) or may be executed at the same or different times on multiple processors and may run under a single operating system process/thread or under different operating system processes/threads.

Thus, the term "computer process" may refer generally to the execution of a set of computer program instructions regardless of whether different computer processes are executed on the same or different processors and regardless of whether different computer processes run under the same operating system process/thread or different operating system processes/threads.

The computer program may be fixed in any form (e.g., source code form, computer executable form, or an intermediate form) either permanently or transitorily in a tangible storage medium, such as a semiconductor memory device (e.g., a RAM, ROM, PROM, EEPROM, or Flash-Programmable RAM), a magnetic memory device (e.g., a diskette or fixed disk), an optical memory device (e.g., a CD-ROM), a PC card (e.g., PCMCIA card), or other memory device.

The computer program may be fixed in any form in a signal that is transmittable to a computer using any of various communication technologies, including, but in no way limited to, analog technologies, digital technologies, optical technologies, wireless technologies (e.g., Bluetooth), networking technologies, and internetworking technologies.

The computer program may be distributed in any form as a removable storage medium with accompanying printed or electronic documentation (e.g., shrink wrapped software), preloaded with a computer system (e.g., on system ROM or fixed disk), or distributed from a server or electronic bulletin board over the communication system (e.g., the Internet or World Wide Web).

Hardware logic (including programmable logic for use with a programmable logic device) implementing all or part of the functionality previously described herein may be designed using traditional manual methods, or may be designed, captured, simulated, or documented electronically using various tools, such as Computer Aided Design (CAD), a hardware description language (e.g., VHDL or AHDL), or a PLD programming language (e.g., PALASM, ABEL, or CUPL).

Any suitable computer readable medium may be utilized. The computer readable medium may be, for example but not limited to, an electronic, magnetic, optical, electromagnetic, infrared, or semiconductor system, apparatus, device, or medium.

More specific examples of the computer readable medium include, but are not limited to, an electrical connection having one or more wires or other tangible storage medium such as a portable computer diskette, a hard disk, a random access memory (RAM), a read-only memory (ROM), an erasable programmable read-only memory (EPROM or Flash memory), a compact disc read-only memory (CD-ROM), or other optical or magnetic storage device.

Programmable logic may be fixed either permanently or transitorily in a tangible storage medium, such as a semiconductor memory device (e.g., a RAM, ROM, PROM, EEPROM, or Flash-Programmable RAM), a magnetic memory device (e.g., a diskette or fixed disk), an optical memory device (e.g., a CD-ROM), or other memory device.

The programmable logic may be fixed in a signal that is transmittable to a computer using any of various communication technologies, including, but in no way limited to, analog technologies, digital technologies, optical technologies, wireless technologies (e.g., Bluetooth), networking technologies, and internetworking technologies.

The programmable logic may be distributed as a removable storage medium with accompanying printed or electronic documentation (e.g., shrink wrapped software), preloaded with a computer system (e.g., on system ROM or fixed disk), or distributed from a server or electronic bulletin board over the communication system (e.g., the Internet or World Wide Web). Of course, some aspects may be implemented as a combination of both software (e.g., a computer program product) and hardware. Still other embodiments of the may be implemented as entirely hardware, or entirely software.

While certain exemplary aspects have been described and shown in the accompanying drawings, it is to be understood that such aspects are illustrative, and that the embodiments are not limited to the specific constructions and arrangements shown and described, since various other changes, combinations, omissions, modifications and substitutions, in addition to those set forth in the above paragraphs, are possible.

Those skilled in the art will appreciate that various adaptations, modifications, and/or combination of the just described embodiments can be configured. Therefore, it is to be understood that, within the scope of the appended claims, the disclosure may be practiced other than as specifically described herein. For example, unless expressly stated otherwise, the steps of processes described herein may be performed in orders different from those described herein and one or more steps may be combined, split, or performed simultaneously.

Those skilled in the art will also appreciate, in view of this disclosure, that different embodiments or aspects described herein may be combined to form other embodiments.

**Reference sign list**

| | |
|---|---|
| 1 | railway vehicle |
| 2 | motor |
| 3 | motor shaft |
| 4a, 4b | first and second gear |
| 5a to 5d | sensors |
| 6 | wheel shaft |
| 7, 7a, 7b | wheel, wheel set |
| 8a, 8b | bearing |
| 9 | bogie frame |
| 10 | diagnostic device |
| 11 | vehicle control unit |
| 12 | inspection result |
| 13 | camera system |
| 101 | input unit |
| 102 | signal capturing unit |
| 103 | frequency analysis unit |
| 104 | data storage |

| 105 | comparison unit |
| 106 | characteristic frequency determination unit |
| 107 | evaluation unit |
| 1010 | input field for wheel diameter |
| 1011a, 1011b | input field for specific ball pass frequency inner ring $BPFI/\omega_S$ |
| 1012a, 1012b | input field for specific ball pass frequency outer ring $BPF0/\omega_S$ |
| 1013a, 1013b | input field for specific fundamental train frequency $FTF/\omega_S$ |
| 1014a, 1014b | input field for specific ball spin frequency $BSF/\omega_S$ |
| 1021a, 1021b | input field for specific gear mesh frequency $GMF/\omega_G$ |

**Claims**

1. Method for diagnosing rotating components of a railway vehicle (1), the railway vehicle (1) including a plurality of wheels (7, 7a, 7b), a plurality of rotating components, at least one sensor (5a - 5d) mounted on at least one of the plurality of rotating components, and at least one diagnostic device (10),

   the method comprising the following steps carried out by the at least one diagnostic device (10):

   - receiving a measuring signal from a sensor (5a - 5d) mounted on a rotating component;
   - determining a frequency spectrum of the measuring signal;
   - receiving a velocity of the railway vehicle (1), wherein the velocity of the railway vehicle (1) is determined from global navigation satellite system data or received from a vehicle control unit (11) of the railway vehicle (1);
   - determining a rotation frequency of the rotating component based on the railway vehicle velocity and a diameter of a wheel (7, 7a, 7b) of the railway vehicle (1);
   - determining a characteristic frequency of the rotating component based on component parameters and the determined rotation frequency;
   - determining a signal amplitude of the frequency spectrum of the measuring signal at the characteristic frequency;
   - comparing the determined signal amplitude with a reference value;

   detecting a failure if the signal amplitude exceeds the reference value, wherein
   the wheel diameter for determining the rotation frequency of the rotating component is updated at predetermined time intervals, wherein the wheel diameter is measured in a first predetermined time interval when a regular inspection of the railway vehicle is carried out and is inputted into the diagnostic device (10) after the measurement, and/or the wheel diameter is measured automatically in a second predetermined time interval and is inputted into the diagnostic device (10) after the measurement.

2. Method according to claim 1, wherein the automatic measurement of the wheel diameter is carried out by at least one measuring device attached to the rail vehicle (1).

3. Method according to claim 1, wherein the automatic measurement of the wheel diameter is carried out by at least one measuring device attached to the railway line.

4. Method according to at least one of the preceding claims 2 or 3, wherein the at least one measuring device is a camera system (13).

5. Method according to at least one of the preceding claims, wherein the measured wheel diameter is inputted into the diagnostic device (10) manually or automatically.

6. Diagnostic device (10) including

   an input unit (101) configured to receive a wheel diameter of a railway vehicle (1) and component parameters of a rotating component,
   a data storage (104) configured to store the wheel diameter and the component parameters received by the input unit (101),
   a signal capturing unit (102) configured to receive a measuring signal from a sensor (5a - 5d) mounted on the rotating component,
a frequency analysis unit (103) configured to determine a frequency spectrum of the received measuring signal,
a characteristic frequency determination unit (106) configured to determine a characteristic frequency of the rotating component based on a velocity of the railway vehicle (1), the wheel diameter and the component parameters, wherein the velocity of the railway vehicle (1) is determined from global navigation satellite system data or received from at least one vehicle control unit (11) of the railway vehicle (1),
a comparison unit (105) configured to compare a signal amplitude of the frequency spectrum of the received measuring signal at the characteristic frequency with a reference value stored in the data storage (104), and
an evaluation unit (107) configured to detect a failure if the signal amplitude exceeds the reference value;

the diagnostic device (10) configured to perform the method according to at least one of the preceding method claims 1 to 5.

7. Railway vehicle including a plurality of wheels (7, 7a, 7b), a plurality of rotating components, at least one sensor (5a - 5d) mounted on at least one of the plurality of rotating components, at least one vehicle control unit (11) and the diagnostic device (10) according to claim 6,
wherein the plurality of rotating components comprises at least one gear (4a, 4b), and at least one bearing (8a, 8b).

8. Computer program product storable in a memory comprising instructions which, when carried out by a computer, cause the computer to perform the method according to at least one of the method claims 1 to 5.

**Patentansprüche**

1. Verfahren zum Diagnostizieren von drehenden Komponenten eines Schienenfahrzeugs (1), wobei das Schienenfahrzeug (1) mehrere Räder (7, 7a, 7b), mehrere drehende Komponenten, mindestens einen Sensor (5a-5d), der an mindestens einer der mehreren drehenden Komponenten montiert ist, und mindestens eine Diagnosevorrichtung (10) enthält, wobei

das Verfahren die folgenden Schritte umfasst, die durch die mindestens eine Diagnosevorrichtung (10) ausgeführt werden:

- Empfangen eines Messsignals von einem Sensor (5a-5d), der an einer drehenden Komponente montiert ist;
- Bestimmen eines Frequenzspektrums des Messsignals;
- Empfangen einer Geschwindigkeit des Schienenfahrzeugs (1), wobei die Geschwindigkeit des Schienenfahrzeugs (1) aus Daten eines globalen Navigationssatellitensystems bestimmt oder von einer Fahrzeugsteuereinheit (11) des Schienenfahrzeugs (1) empfangen wird;
- Bestimmen einer Drehfrequenz der drehenden Komponente auf der Grundlage der Schienenfahrzeuggeschwindigkeit und eines Durchmessers eines Rads (7, 7a, 7b) des Schienenfahrzeugs (1);
- Bestimmen einer Eigenfrequenz der drehenden Komponente auf der Grundlage von Komponentenparametern und der bestimmten Drehfrequenz;
- Bestimmen einer Signalamplitude des Frequenzspektrums des Messsignals bei der Eigenfrequenz;
- Vergleichen der bestimmten Signalamplitude mit einem Bezugswert; und
- Detektieren eines Fehlers, wenn die Signalamplitude den Bezugswert überschreitet, und

der Raddurchmesser zum Bestimmen der Drehfrequenz der drehenden Komponente in vorgegebenen Zeitintervallen aktualisiert wird, wobei der Raddurchmesser in einem ersten vorgegebenen Zeitintervall gemessen wird, wenn eine regelmäßige Untersuchung des Schienenfahrzeugs ausgeführt wird, und nach der Messung in die Diagnosevorrichtung (10) eingegeben wird und/oder der Raddurchmesser in einem zweiten vorgegebenen Zeitintervall automatisch gemessen wird und nach der Messung in die Diagnosevorrichtung (10) eingegeben wird.

2. Verfahren nach Anspruch 1, wobei die automatische Messung des Raddurchmessers durch mindestens eine Messvorrichtung ausgeführt wird, die am Schienenfahrzeug (1) angebracht ist.

3. Verfahren nach Anspruch 1, wobei die automatische Messung des Raddurchmessers durch mindestens eine Messvorrichtung ausgeführt wird, die am Schienenweg angebracht ist.

4. Verfahren nach mindestens einem der vorhergehenden Ansprüche 2 oder 3, wobei die mindestens eine Messvorrichtung ein Kamerasystem (13) ist.

5. Verfahren nach mindestens einem der vorhergehenden Ansprüche, wobei der gemessene Raddurchmesser in die Diagnosevorrichtung (10) manuell oder automatisch eingegeben wird.

6. Diagnosevorrichtung (10), die Folgendes enthält:

   eine Eingabeeinheit (101), die konfiguriert ist, einen Raddurchmesser eines Schienenfahrzeugs (1) und Komponentenparameter einer drehenden Komponente zu empfangen,
   einen Datenspeicher (104), der konfiguriert ist, den Raddurchmesser und die Komponentenparameter, die durch die Eingabeeinheit (101) empfangen wurden, zu speichern,
   eine Signalaufnahmeeinheit (102), die konfiguriert ist, von einem Sensor (5a-5d), der an der drehenden Komponente montiert ist, ein Messsignal zu empfangen,
   eine Frequenzanalyseeinheit (103), die konfiguriert ist, ein Frequenzspektrum des empfangenen Messsignals zu bestimmen,
   eine Bestimmungseinheit (106) für Eigenfrequenzen, die konfiguriert ist, eine Eigenfrequenz der drehenden Komponente auf der Grundlage einer Geschwindigkeit des Schienenfahrzeugs (1), des Raddurchmessers und der Komponentenparameter zu bestimmen, wobei die Geschwindigkeit des Schienenfahrzeugs (1) aus Daten eines globalen Navigationssatellitensystems bestimmt wird oder von mindestens einer Fahrzeugsteuereinheit (11) des Schienenfahrzeugs (1) empfangen wird,
   eine Vergleichseinheit (105), die konfiguriert ist, eine Signalamplitude des Frequenzspektrums des empfangenen Messsignals bei der Eigenfrequenz mit einem Bezugswert, der im Datenspeicher (104) gespeichert ist, zu vergleichen, und
   eine Bewertungseinheit (107), die konfiguriert ist, einen Fehler zu detektieren, wenn die Signalamplitude den Bezugswert überschreitet; wobei
   die Diagnosevorrichtung (10) konfiguriert ist, das Verfahren nach mindestens einem der vorhergehenden Verfahrensansprüche 1 bis 5 durchzuführen.

7. Schienenfahrzeug, das mehrere Räder (7, 7a, 7b), mehrere drehende Komponenten, mindestens einen Sensor (5a-5d), der an mindestens einer der mehreren drehenden Komponenten montiert ist, mindestens eine Fahrzeugsteuereinheit (11) und die Diagnosevorrichtung (10) nach Anspruch 6 enthält, wobei die mehreren drehenden Komponenten mindestens ein Getriebe (4a, 4b) und mindestens ein Lager (8a, 8b) umfassen.

8. Computerprogrammprodukt, das in einem Speicher speicherbar ist und Befehle enthält, die, wenn sie durch einen Computer ausgeführt werden, den Computer veranlassen, das Verfahren nach mindestens einem der Verfahrensansprüche 1 bis 5 durchzuführen.

**Revendications**

1. Procédé de diagnostic de composants rotatifs d'un véhicule ferroviaire (1), le véhicule ferroviaire (1) incluant une pluralité de roues (7, 7a, 7b), une pluralité de composants rotatifs, au moins un capteur (5a - 5d) monté sur l'un au moins de la pluralité de composants rotatifs, et au moins un dispositif de diagnostic (10),

   le procédé comprenant les étapes suivantes exécutées par ledit au moins un dispositif de diagnostic (10) :

      - recevoir un signal de mesurage depuis un capteur (5a - 5d) monté sur un composant rotatif ;
      - déterminer un spectre de fréquence du signal de mesurage ;
      - recevoir une vitesse du véhicule ferroviaire (1), la vitesse du véhicule ferroviaire (1) étant déterminée à partir de données de système satellite global de navigation ou est reçue depuis une unité de commande de véhicule (11) du véhicule ferroviaire (1) ;
      - déterminer une fréquence de rotation du composant rotatif sur la base de la vitesse de véhicule ferroviaire et d'un diamètre d'une roue (7, 7a, 7b) du véhicule ferroviaire (1) ;
      - déterminer une fréquence caractéristique du composant rotatif sur la base de paramètres de composant et de la fréquence de rotation déterminée ;
      - déterminer une amplitude de signal du spectre de fréquence du signal de mesurage à la fréquence caractéristique ;

- comparer l'amplitude de signal déterminée à une valeur de référence ;
- détecter une défaillance si l'amplitude de signal excède la valeur de référence,

dans lequel le diamètre de roue destiné à déterminer la fréquence de rotation du composant rotatif est mis à jour à des intervalles temporels prédéterminés, dans lequel le diamètre de roue est mesuré dans un premier intervalle de temps prédéterminé quand une inspection régulière du véhicule ferroviaire est exécutée, et est entré dans le dispositif de diagnostic (10) après le mesurage, et/ou le diamètre de roue est mesuré de manière automatique dans un second intervalle de temps prédéterminé et est entré dans le dispositif de diagnostic (10) après le mesurage.

2. Procédé selon la revendication 1, dans lequel le mesurage automatique du diamètre de roue est exécuté par ledit au moins un dispositif de mesurage fixé sur le véhicule ferroviaire (1).

3. Procédé selon la revendication 1, dans lequel le mesurage automatique du diamètre de roue est exécuté par au moins un dispositif de mesurage fixé sur la ligne de chemin de fer.

4. Procédé selon l'une au moins des revendications précédentes 2 ou 3, dans lequel ledit au moins un dispositif de mesurage est un système de caméra (13).

5. Procédé selon l'une au moins des revendications précédentes, dans lequel le diamètre de roue mesuré est entré dans le dispositif de diagnostic (10) de manière manuelle ou automatique.

6. Dispositif de diagnostic (10) incluant

une unité d'entrée (101) configurée pour recevoir un diamètre de roue d'un véhicule ferroviaire (1) et des paramètres de composant d'un composant rotatif,
un stockage de données (104) configuré pour stocker le diamètre de roue et les paramètres de composant reçus par l'unité d'entrée (101),
une unité de capture de signal (102) configurée pour recevoir un signal de mesurage depuis un capteur (5a - 5d) monté sur le composant rotatif,
une unité d'analyse de fréquence (103) configurée pour déterminer un spectre de fréquence du signal de mesurage reçu,
une unité de détermination de fréquence caractéristique (106) configurée pour déterminer une fréquence caractéristique du composant rotatif sur la base d'une vitesse du véhicule ferroviaire (1), du diamètre de roue et des paramètres de composant, dans lequel la vitesse du véhicule ferroviaire (1) est déterminée à partir de données de système satellite global de navigation ou est reçue à partir d'au moins une unité de commande de véhicule (11) du véhicule ferroviaire (1),
une unité de comparaison (105) configurée pour établir une comparaison entre une amplitude de signal du spectre de fréquence du signal de mesurage reçu à la fréquence caractéristique et une valeur de référence stockée dans le stockage de données (104), et
une unité d'évaluation (107) configurée pour détecter une défaillance si l'amplitude de signal excède la valeur de référence ;
le dispositif de diagnostic (10) configuré pour mettre en oeuvre le procédé selon l'une au moins des revendications précédentes 1 à 5 du procédé.

7. Véhicule ferroviaire incluant une pluralité de roues (7, 7a, 7b), une pluralité de composants de rotation, au moins un capteur (5a - 5d) monté sur l'un au moins de la pluralité de composants rotatifs, au moins une unité de commande de véhicule (11) et le dispositif de diagnostic (10) selon la revendication 6, dans lequel la pluralité de composants rotatifs comprennent au moins un engrenage (4a, 4b), et au moins un palier (8a, 8b).

8. Produit de programme d'ordinateur pouvant être stocké dans une mémoire comprenant des instructions qui, quand elles sont exécutées par un ordinateur, amènent l'ordinateur à mettre en oeuvre le procédé selon l'une au moins des revendications 1 à 5 du procédé.

Fig. 1

EP 3 988 896 B1

**Fig. 2a**

rotation frequency

characteristic frequency

amplitude

frequency

**Fig. 2b**

Amplitude at characteristic frequency

updated wheel diameter

non-updated wheel diameter

Fig. 3

Fig. 4b

Fig. 4a

**Fig. 5**

sensor signals

component parameters
wheel diameter

102  101

10

103  104

105  106

vehicle speed

107

alarm

**Fig. 6**

START → receive sensor signal (S601) → FFT(sensor signal) (S603) → $A_{FFT}(f_{char}(i))$ (S605) → $A_{FFT} > A_{threshold}$

receive v (S602) → read CP(i) and $D_{wheel}$ (S604) → $f_{char}(i) = CP(i) * v/\pi/D_{wheel}$ (S606)

$A_{FFT} > A_{threshold}$ — YES → ALARM; NO → $i = i_{max}$ — YES → END; NO → i=i+1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8577546 B2
- US 2007118333 A1
- WO 2019155627 A1
- US 10151582 B1